# EUROPEAN PATENT SPECIFICATION

(11) **EP 2 881 644 B1**
(45) Date of publication and mention of the grant of the patent: **03.07.2019**
(21) Application number: 13196211.0
(22) Date of filing: 09.12.2013
(51) Int. Cl.: F16L 59/135

(54) **Device for mounting and fixing installations**
Vorrichtung zur Montage und Befestigung von Installationen
Dispositif de montage et de fixation d'installations

(43) Date of publication of application: 10.06.2015
(73) Proprietor: Kaimann GmbH, 33161 Hövelhof (DE)
(72) Inventor: Kaimann, Georg Josef, 33161 Hövelhof (DE)
(74) Representative: Hoffmann Eitle

(56) References cited:
- WO-A1-2004/070255
- DE-A1- 2 852 515
- DE-U1- 9 318 566
- DE-U1- 9 421 307
- FR-A1- 2 643 119
- US-A- 4 767 087
- US-A1- 2009 095 847

## Description

The present invention relates to a device for mounting and fixing installations, preferably pipes or ducts, the manufacturing of such item and the use of such item.

There is a broad variety of embodiments of mounting or fixing systems existing for supporting media pipes, vessels, ducts etc. Due to energy saving and safety requirements some of such applications will require thermal and/or acoustic insulation. Integrating insulation materials into the support item, however, implicates several problems that are not easy to be overcome. EP 2476942 A1 discloses a system where round base plates with spines or spikes are pushed on and through the insulation material. However, with the spikes cutting through the insulation there is a notable risk of humidity diffusing through the item and thus for the notorious condensation under insulation (CUI). Additionally, the general stability of such system is low: deformation by attaching an e.g. metal clamp to fix the installation to walls or ceilings is very likely, thus, risk of break or at least loss of insulation thickness by compression, a problem which is even more present at the very soft jacketing solution mentioned in DE 20312763 U1; there is no "360 degree" mounting possibility either, as care has to be taken how and where the plates are attached. Same deficiencies are to be found in US 3,122,346 A1 and DE 197 46 651 A1, which claim a system where also spacers are being pierced through the insulation material, and the outer layer is a metastable grid only. Half or full shell constructions at least could solve the stability problem, however, the existing constructions show other constraints: DE 94 21 308 U1 describes a clamp on the pipe with two half-shell insulation elements covering the clamp, and DE 94 21 307 U1 uses rigid hollow half-shell elements filled with insulation material that are fixed with a clamp on the outside; US 4,852,831 A1, US 5,078,346 A1, US 4,323,088 A1 and US 3,000,433 A1 also use closed shell systems, however, with pipe holding elements representing notable thermal and condensation bridges. The insulation performance (and the condensation blocking performance) of the half-shell solution disclosed in GB 2 315 107 A and US 6,126,119 A1 is very low, as the major target of the inventions is to support mechanically. The general drawback of such systems is 1) the fact that thermal bridging will occur (i.e. loss of insulation performance), as the -thermally conductive- fixing elements touch the installation itself, and 2) the fact that the closed-shell construction would require bonding of further insulation elements to the shell and not to the insulation part of the fixing device. This is not favoured in real life installations, as on one hand bonding insulations such as elastomerics, polyolefinics or fibres to smooth, closed surfaces is critical and on the other hand the large shell surface both represents a thermal and a condensation bridge. Some of a.m. embodiments and also e.g. DE 91 02 934 U1, CN 2493809 Y, CN 2498440, EP 0 503 566 A1 and US 4,772,507 A1 additionally use at least two different insulation materials when it comes to elastomeric insulation (the elastomeric insulation itself and a rigid foam to provide support, sometimes in connection with metallic support even) which again needs costly manufacturing and is not completely safe vs. CUI issues. Additionally, the rigid insulation part of all of the a.m. embodiments may undergo risk of cracking or breaking e.g. through vibration or other mechanical impact, often simply by adjusting a clamp already. A general disadvantage of all a.m. systems is the fact that they definitely lack in versatility, i.e. almost each diameter of pipe will require a dedicated fixing system. Means, with the vast number of pipe or duct diameters to be fixed in practice none of such systems will be able to cover the entirely required range and the same time exhibiting a complete set of stability, safe CUI prevention, good insulation, good economics and easy-to-handle properties. Generally, the challenging compromise of providing certain rigidity being sufficient for good overall stability and sufficient remaining flexibility for good and versatile mounting properties is not satisfactorily covered by any of the a.m. solutions.

A major object of the present invention thus is to provide a device not showing the above mentioned deficiencies but exhibiting easy mounting (and de-/remounting) properties, versatility in fixing various diameters of installations per unit (i.e. a small range of items), safe CUI prevention, consistent insulation properties, and low manufacturing complexity and costs.

Surprisingly, it is found that such system not showing the above mentioned disadvantages can be made comprising at least two shell parts being connected by a hinge and/or a closure element, preferably a snap-lock system showing at least two cradle-like distance keepers or stabilizing ribs per shell part with special design and geometry, in particular together with a specially designed insulation element comprising compressible material, preferably expanded polymer based material, which is according to an embodiment of the present invention an integral part of the device.

Document US 2009/0095847 A1 refers to a cold-insulated fixed-point support for a low-temperature pipeline, which includes an insulating system arranged between an outer shell and a supportable low-temperature pipeline having solid thermal insulating material, which thermally insulates the pipeline from the low-temperature environment.

Another document is DE 94 21 307 U1.

According to claim 1 a device for mounting and fixing installations, preferably pipes or ducts, is provided, comprising: at least two shell parts made from rigid material, with each of the shell parts having at least one closure element, preferably a snap-lock element, and/or a hinge to be connected with at least one next shell part to form a closed shell when fastened, with each shell part having at least two cradle inserts for bearing a compressible and/or compressed insulation element, wherein the total sum of the lengths of inner circular arcs of one set of cradle inserts is at least 40% and maximum 100% of the total arc length of the resulting inner cradle circle.

The inner circular arcs of a set of cradle inserts are formed at a side of the inserts facing the installation, when installed in place. Preferably, the cradle inserts are substantially plate- shaped and are spaced apart from each other in the axial direction of the device, and extend from an inner surface of the shell parts, respectively. The shell parts are in particular oval or circular.

The resulting inner cradle circle is formed by extending the inner circular arcs of the cradle inserts, when the shell parts are closed.

According to one preferred embodiment, the insulation element has surface structures on its inner face (the installation side), preferably triangular, rectangular or rib structures so as to provide additional thermal and/or acoustic decoupling and to increase friction force between insulation and installation to allow mounting installations vertically.

According to the invention the insulation element has a compressibility of at least 5%, maximum 70% and has a progressive increase in modulus when being compressed, and wherein the combination of insulation element geometry and properties and the cradle inserts is selected in a way that the cradle inserts do not punch through the insulation element and do not get in direct touch with the installation when the device is mounted and the installation is filled with media, wherein the preferred minimum distance between cradle insert and installation is around 4 mm. Thereby, the cradle inserts are shielded from the installation.

Hereinafter the present invention will be explained in a non-limiting manner by way of example by means of advantageous embodiments with reference to the accompanying drawings wherein
Fig. 1 shows a perspective view of a first embodiment of a pre-insulated fixing system (1) according to the present invention;
Fig. 2 shows a side view of the fixing system (1) of Fig. 1 in open state;
Fig. 3 shows a cross section of the fixing system (1) of Fig. 2 in closed state, with the insulation (30) bearing a small pipe (40);
Fig. 4 again shows a cross section of the fixing system (1) of Fig. 2 in closed state, now with the insulation (30) bearing a big pipe (41), illustrating the insulation and decoupling effect of the embodiment being independent from various pipe geometries.
Fig. 5 shows a perspective view of the fixing system in Fig. 1 showing the positioning of a pipe (40) / the mounting situation; the insulation material (30) is not shown here for better clarity.
Figs. 6a) and 6b) show cross-sectional views of a second embodiment of the present invention, comprising a two-stage closure mechanism (21c) to lock the fixing system.
Figs. 7a) and 7b) shows a perspective and a cross-sectional view of a third embodiment of the present invention with an integrated thread (50, 51) for mounting e.g. a threaded rod (52) to avoid additional clamp handling.

Hereafter, preferred embodiments of the present invention are described with reference to the drawings. Single features of the following embodiments or modifications thereof may be combined with features of other embodiments or modifications so as to form further embodiments.

At least two shell parts 11a,11b (at this number forming half-shells) can be of oval or circular shape and can be connected to form a complete shell by means of at least two snap-lock portions 21a, 21b (closure element) per shell part 11a,11b, or - as shown in the present first embodiment - by means of at least one hinge 22 and at least one snap-lock portion 21a, 21b (closure element) per shell part 11a, 11b, wherein the latter embodiment is preferred.

Each shell part 11a, 11b comprises at least two inserts 20 for supporting an installation. Each insert has the form of a cradle, when viewed in an axial direction of the shell part 11, 11b. In particular, each insert comprises two protruding portions being connected by an arc-shaped portion 2a, 2b.

The radius of arc-shaped portions 2a, 2b have according to the present embodiment the same center point as the radius of the outer surface of the shell parts 11a, 11b. While the shell parts 11a, 11b form a semi-circular shape, when viewed in an axial direction of the shell parts 11, 11b, the arc portions have a slightly shorter arc length so that the protruding portions of inserts 20 of the shell part 11a form a gap between the corresponding protruding portions of the shell part 11b as view in the axial direction of the shell parts, when the device 1 is in a closed state, i.e. when the snap-lock portion 21a, 21b of the shell parts 11a, 11b are in a fixed state.

The outer side of each shell part 11a, 11b may comprise ribs and/or grooves 23 to facilitate the application of a clamp. Two half-shell parts are connected to form a full shell, or more shell parts, depending on size and geometry of the installation to be mounted, form a full shell. The shell parts 11a, 11b and their cradle inserts 20, the hinge(s) 22 and snap-lock portions 21a, 21b can be made from cast metal and/or moulded or deep-drawn thermoplastic and/or moulded or deep-drawn thermoplastic elastomer and/or moulded thermoset material. Thermoplastic material or thermosets are preferred due to high productivity in manufacturing and good final stability of the shell. The materials for manufacturing the shell parts can be reinforced, e.g. by glass or polymeric fibres and/or the shell parts itself can show an insert (e.g. a metal grid) to increase stability, as well as optional surface structures to obtain more rigidity and/or for thermal and/or acoustic decoupling of the shell parts 11a, 11b from an insulation element 30.

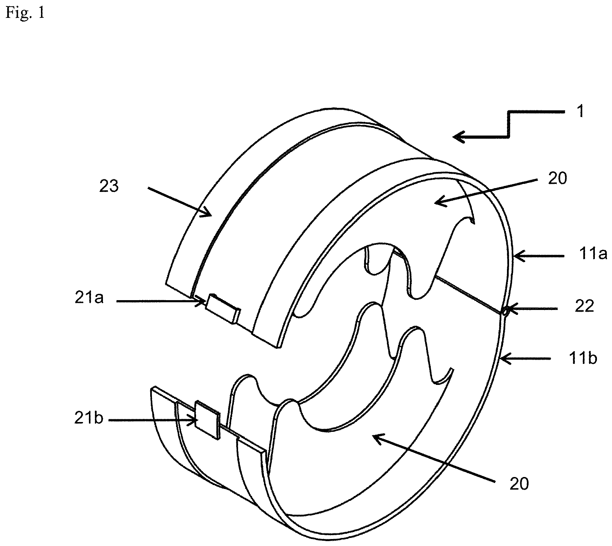

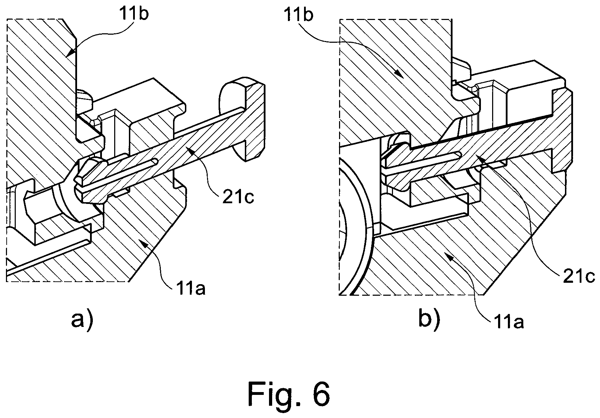

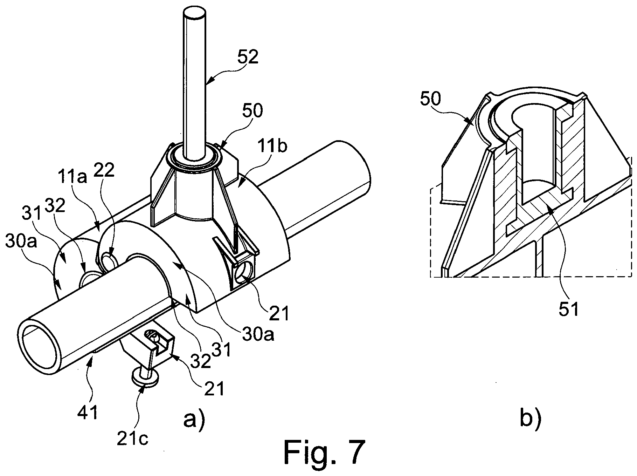

The snap-lock portions 21a, 21b can be present in single realisation (as in fig. 1) or multiple realisations per shell part side and can be designed for reclosability for easy mounting and demounting. It may comprise a simple male/female system which would allow corrections of the mounting situation by unlocking; or a splint system 21c (closure element), see fig. 6 and 7, which would allow to pre-install (fig. 6a) the fixing system and to completely fix it in a second step (fig. 6b) after all corrections and adaptations had been carried out.

The hinge 22 can be realised as a simple indentation between the shell parts (which allows easy manufacturing of the complete shell by one step moulding or casting) or as at least one classic hinge using at least one splint pin (as e.g. in fig. 7). Such hinge can be prefabricated or the hinge can be assembled when eventually mounting the system to the installation.

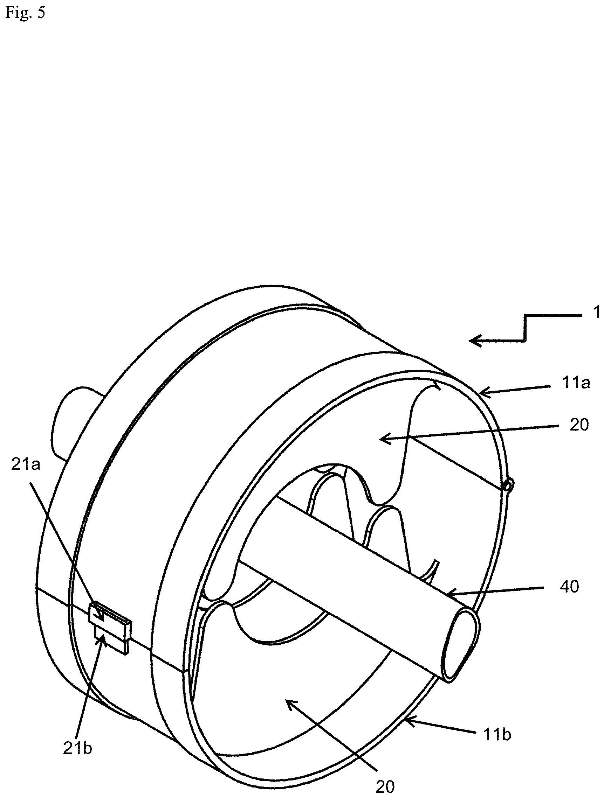

The inserts 20 are designed as cradles (see fig. 1-5) which can show round, triangular, semi-hexagonal etc. inner radius. Preferred is a round shape, which is also shown in the present embodiments.

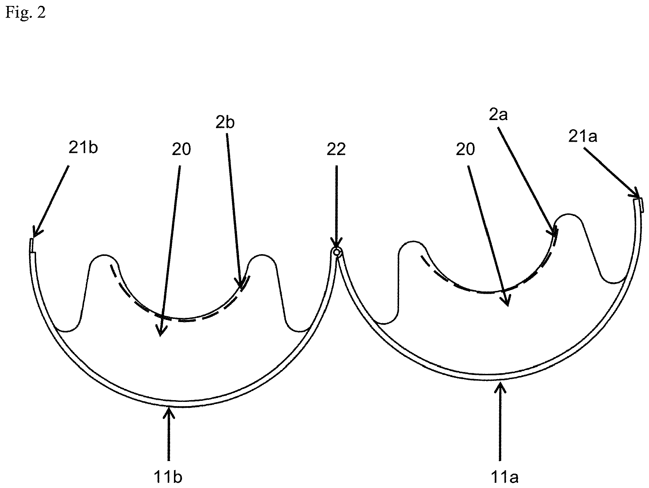

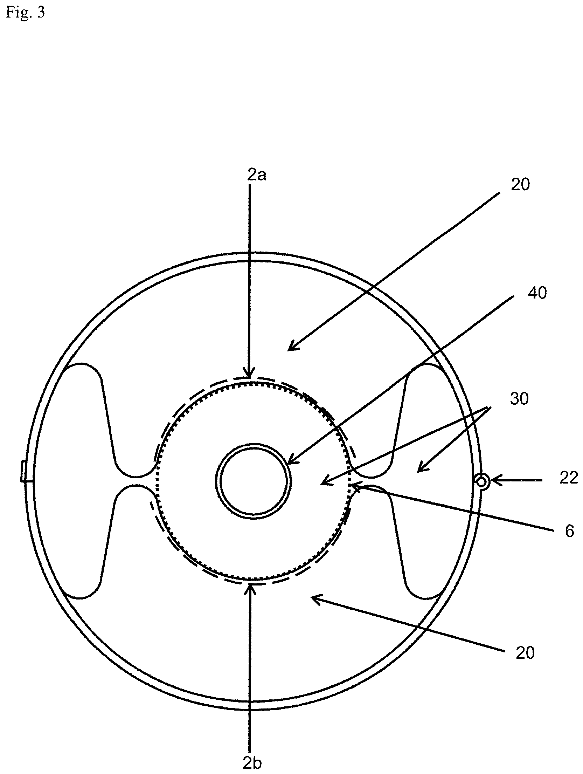

The cradle inserts 20 are acting as a versatile bearing where the installations are fixed and centred in a layer formed by the partially compressed insulation element 30. i.e., the installations are not in direct contact with the cradles/bearings during mounting and will not get into contact with the cradles even when not being correctly mounted in 90 degrees angle to a virtual thread rod / support axis, and will also not get in contact with the cradles when filled with heavy media or bearing any other weight. This is achieved by firstly using a compressible, but high-strength insulation material which will show increased compression resistance per compression ratio (progressive modulus), secondly by using soft-edge design for all sides, rims and edges of the cradles to prevent cutting effects and thirdly by applying a geometry where the total sum of the inner circular arcs 2 of one set of cradle inserts is at least 40% and maximum 100% of the total of the resulting inner cradle circle (6), see fig. 2 and 3.

One advantageous result of this design is a safe decoupling of the installation from the support and wall or ceiling structures, both thermally and acoustically, which means higher thermal efficiency, additional noise and vibration reduction properties and safe CUI prevention in comparison to devices known in the art.

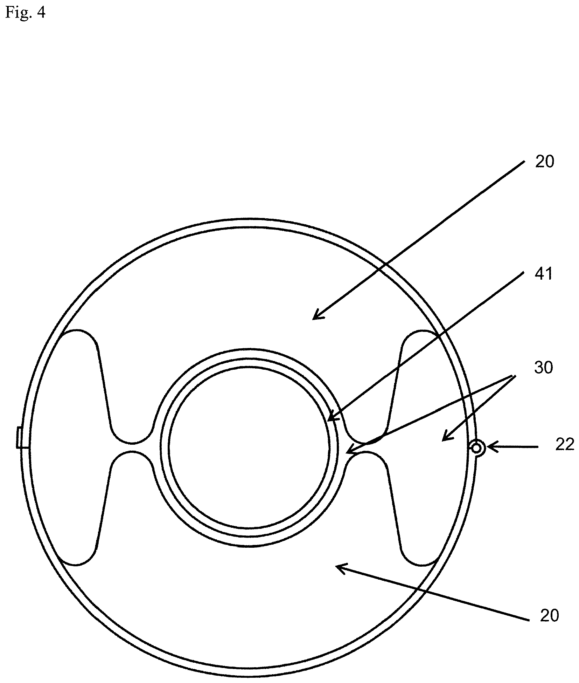

Another advantageous result of this design is the fact that one geometry of shell/cradle combination provided by the device 1 can safely bear numerous sizes or diameters of installations (see fig.3, 4), as the cradles allow to safely, but not too rigidly fix a small to big range of installation diameters per cradle set.

Another advantage of such design is the fact that manufacturing of the devices 1 serving as supports for a vast range of installations is significantly facilitated, as the cradles can be made as inserts (or formed, cast or moulded as inserts) and thus one shell type/size can include various cradle sizes/geometries and therefore render the system even more versatile.

The insulation element 30 comprises at least one layer of compressible open and/or closed porosity material of fibrous and/or powder-like and/or polymer based material. Preferred are polymer based materials, especially preferred are expanded thermoplastic and/or elastomeric materials, such as foams and/or sponges based on polyolefins, styrenics, polyamides, polyesters / polyurethanes /PUR/PIR, polyethers, thermoplastic elastomers (SAN, SEBS, PVC etc.), rubbers (ACM/AEM, AU/EU, BR, BIIR, CIIR, CM/CR, CSM/CSR, (G)(E)CO, EPM/EPDM, EVM, FKM/F(E)PM, GPO, IR, IIR, (P)/(F)(V)MQ, (H)NBR, NR, SBR, T etc.), or any mixtures and/or combinations thereof. Especially preferred among polymeric materials are expanded elastomers and their combinations.

A second embodiment of an insulation element 30a may comprise a combination of a compressible layer 32 on the inner side (the installation side) - which does not necessarily need to be an insulation material - in combination with a non-compressible insulation layer 31, see fig. 7a, like foamed glass or ceramics, expanded thermoset material (phenolics, melamine etc.), foamed metal, or the like, or any combinations thereof. Preferred are combinations of elastomeric materials as compressible part with any non-compressible insulation material.

It has been found that a compressibility of the compressible layer 32 - regardless of its insulation performance - of at least 5%, maximum 70% in combination with a progressive increase of modulus when compressing is ideal to fulfil the a.m. requirements concerning maintaining insulation layer between cradle insert and installation. The preferred minimum distance between cradle insert and installation, filled by insulation, is 4 mm.

When being compressed, the insulation element 30, 30a will become more dense and subsequently increase its water vapour barrier properties, shielding the cradle inserts 20 from the installation and thus combining anti-CUI, noise absorption (structure borne sound) and thermal decoupling.

For thermal insulation purposes the insulation element 30, 30a should show a closed cell content of at least 80%, a density of at least 35 kg/m³ according to ISO 845, and a thermal conductivity of less than 0.15 W/(m*K) at 0 °C, preferably less than 0.05 W/(m*K) at 0 °C according to EN ISO 12667 or EN ISO 8497, respectively, as well as a water vapour transmission (WVT) blocking value (µ) of at least 2500, preferably at least 5000, especially preferred at least 7000 according to EN 12086, or EN 13469, respectively.

The insulation material 30, 30a may be fixed to the shell parts 11a,11b by adhesives or be placed loosely in the shell parts 11a,11b. The inserts (20) may cut through the insulation material 30, 30a, or the insulation material 30, 30a is pre-slit to allow easy sliding over the cradles. The slits, however, will not entirely penetrate through the insulation material, i.e. its inner surface (bearing the installation) is completely closed and the a.m. compression / progression effect is secured.

The insulation element 30, 30a may show surface structures on its inner side (towards the installation) or outside (towards the shell), such as triangular (i.e. in total providing a star-shape inner layer), rectangular, rib structures etc. to provide additional thermal and/or acoustic decoupling and to increase friction force between insulation and installation, which allows to mount installations vertically, e.g. from ceiling down to floor.

The insulation element 30, 30a may be applied with adhesive (or self-adhesive with release liner) on its edges and sidewalls to 1) ensure condensation tight closing of the insulation shell parts itself and 2) ensure condensation tight closing of the butt joints when continuing the insulation work on the installation.

The insulation element 30, 30a is preferably slightly protruding from the shell to facilitate connecting other insulation materials.

At least one of the shell parts 11a, 11b may comprise at least one thread adapter (50) being integral part of the structure showing an integrated, e.g. overmoulded thread (51). This embodiment does not require an extra clamp and can be fixed directly to walls or ceilings using standard threaded rods.

Other embodiments of the present invention may comprise additional layers inside or on the shell for acoustic, mechanical, protection, stability or decorative purpose or any of the combinations thereof.

It is an advantage of the present invention that it is providing reliable and sustainable thermal insulation and acoustic damping with a low number of shell sizes and cradle inserts for a huge number of installation diameters.

E.g, to provide pre-insulated supports with 6 to 32 mm of insulation thickness for pipe outer diameters from 6 to 189 mm existing pipe supports will require between 50 and 80 different articles, whereas the present invention would only require 6 to 8 shell sizes and a very limited number of cradle inserts.

It is another advantage of the present invention that there is permanent and safe thermal, acoustic and CUI decoupling due to the fact that the installation is solely in contact with insulation material and does not get touched by parts of the mechanical support itself.
It is another advantage of the present invention that - depending on the choice of insulation and shell material - it can be used for very low and high temperature installations, indoors and outdoors.

Another advantage of the present invention is the fact that the shell could also be mounted on readily insulated installations, if necessary.

It is another advantage of the present invention that it can be easily applied, removed or changed or exchanged during mounting and installation work.

It is an advantage of the present invention that it can be produced by casting, deep-drawing, moulding etc. in a very economical way.

It is a further advantage of the present invention that the acoustic decoupling and absorption properties of the whole shell will be improved by the compression of the innermost part of the insulation material, as the resulting different (higher) densities will lead to reduction of structure-borne noise.

It is a further advantage of the present invention that it provides a high level of structural stability in combination with low total weight.

## Claims

1. A device (1) for mounting and fixing installations (40, 41), preferably pipes or ducts, in particular a pre-insulated device (1), comprising
at least two shell parts (11a, 11b) made from rigid material, with each of the shell parts (11a, 11b) having at least one closure element (21a-21c), preferably a snap-lock element (21a-21b), and/or a hinge (22) to be connected with at least one next shell part (11a, 11b) to form a closed shell when fastened,
with each shell part (11a, 11b) having at least two cradle inserts (20) for bearing a compressible and/or compressed insulation element (30, 30a),
wherein the total sum of the lengths of inner circular arcs (2) of one set of cradle inserts is at least 40% and maximum 100% of the total arc length of a resulting inner cradle circle (6), and
wherein an insulation element (30, 30a) is provided at the inner side of each shell part (11a, 11b), which insulation element (30, 30a) is in contact with the at least two cradle inserts (20) of the corresponding shell part (11a, 11b),
**characterized in that**
the insulation element (30, 30a) has a compressibility of at least 5%, maximum 70% and has a progressive increase in modulus when being compressed, and wherein the combination of insulation element geometry and properties and the cradle inserts is selected in a way that the cradle inserts (20) do not punch through the insulation element and do not get in direct touch with the installation when the device is mounted and the installation is filled with media.

2. The device according to claim 1, wherein the insulation element (30, 30a) is protruding from the corresponding shell part (11a, 11b).

3. The device according to claim 1 or 2, wherein at least one layer of the compressible open and/or closed cell insulation element (30, 30a) is adhered to the shell parts (11a, 11b) or loosely fit into the shell parts (11a, 11b).

4. The device according to claim 1, 2 or 3, wherein it is adapted to have a preferred minimum distance between cradle insert and installation of around 4 mm.

5. The device (1) according to any of claims 1-4, wherein the insulation element (30a) comprises at least one layer of non-compressible insulation layer (31) and at least one layer of compressible material (32), the layer of compressible material (32) being present at an inner side of the non-compressible insulation layer (31).

6. The device (1) according to any of claims 1-5, wherein the insulation element (30, 30a) shows a closed cell content of at least 80%, a density of at least 35 kg/m3 according to ISO 845, and a thermal conductivity of less than 0.15 W/(m*K) at 0 °C, preferably less than 0.05 W/(m*K) at 0 °C according to EN ISO 12667 or EN ISO 8497, respectively, as well as a water vapour transmission (WVT) blocking value (µ) of at least 2500, preferably at least 5000, especially preferred at least 7000 according to EN 12086, or EN 13469, respectively.

7. The device (1) according to any of claims 1-5, wherein at least a portion of the insulation element (30, 30a) is polymer-based, preferably elastomer-based.

8. The device (1) according to any of claims 1-6, wherein the closure element (21a, 21b, 21c) is present in single realisation or multiple realisations per shell part side and is reclosable.

9. The device (1) according to any of claims 1-8, wherein the closure element (21c) of the shell parts (11a, 11b) is realised by a splint system (21c) which is acting in two steps, one step to enable pre-fixation and a second step to tightly close the shell.

10. The device according (1) to any of claims 1-9, wherein at least one of the shell parts (11a, 11b) comprises at least one thread adapter (50) including an integrated thread (51).

11. The device (1) according to any of claims 1-10 wherein the insulation element (30, 30a) has surface structures on its inner face, preferably triangular, rectangular or rib structures.

12. The device (1) according to any of claims 1-10, wherein the insulation element (30, 30a) is applied on its edges and/or its sidewalls with an adhesive or self-adhesive, preferably with release liner.

13. The device (1) according to any of claims 1-12, wherein the shell parts (11a, 11b) are made from metal, a thermoplast, a thermoplastic elastomer, or a thermoset, or any combinations thereof.

14. Method for manufacturing a device (1) according to any of the previous claims, wherein the shell parts (11a, 11b) are made by casting or moulding, and wherein the insulation element (30, 30a) is made by moulding or extrusion expansion.

15. The use of a device (1) according to any of claims 1-13 for mounting and fixing installations, preferably pipes or tubes or annular ducts.

## Patentansprüche

1. Vorrichtung (1) zum Montieren und Befestigen von Installationen (40, 41), vorzugsweise Leitungen oder Kanälen, insbesondere eine vorisolierte Vorrichtung (1), umfassend
mindestens zwei Mantelteile (11a, 11b) aus einem steifen Material hergestellt, wobei jedes der Mantelteile (11a, 11b) mindestens ein Schließelement (21a-21c), vorzugsweise ein Schnappverschlusselement (21a-21b), und/oder ein Scharnier (22) aufweist, das mit mindestens einem folgenden Mantelteil (11a, 11b) verbunden werden soll, um, wenn festgemacht, einen geschlossenen Mantel zu bilden,
wobei jeder Mantelteil (11a, 11b) mindestens zwei Satteleinsätze (20) zum Lagern eines komprimierbaren und/oder komprimierten Isolierelements (30, 30a) aufweist,
wobei die Gesamtsumme der Längen von inneren Kreisbögen (2) von einem Satz von Satteleinsätzen mindestens 40 % und maximal 100 % der Gesamtbogenlänge eines resultierenden inneren Sattelkreises (6) ist, und
wobei ein Isolierelement (30, 30a) an der Innenseite von jedem Mantelteil (11a, 11b) bereitgestellt ist, wobei das Isolierelement (30, 30a) in Kontakt mit den mindestens zwei Satteleinsätzen (20) des entsprechenden Mantelteils (11a, 11b) ist,
**dadurch gekennzeichnet, dass**
das Isolierelement (30, 30a) eine Kompressibilität von mindestens 5 %, maximal 70 % aufweist und eine progressive Modulzunahme aufweist, wenn es komprimiert wird, und wobei die Kombination aus Isolierelement-Geometrie und Eigenschaften und den Satteleinsätzen derart ausgewählt ist, dass die Satteleinsätze (20) nicht durch das Isolierelement hindurchtreten und nicht in direkten Kontakt mit der Installation kommen, wenn die Vorrichtung montiert ist und die Installation mit Medien gefüllt ist.

2. Vorrichtung nach Anspruch 1, wobei das Isolierelement (30, 30a) vom entsprechenden Mantelteil (11a, 11b) vorsteht.

3. Vorrichtung nach Anspruch 1 oder 2, wobei mindestens eine Lage des komprimierbaren offenen und/oder geschlossenen Zellisolierelements (30, 30a) an die Mantelteile (11a, 11b) gehaftet ist oder lose in die Mantelteile (11a, 11b) eingepasst ist.

4. Vorrichtung nach Anspruch 1, 2 oder 3, wobei sie angepasst ist, um einen bevorzugten Minimalabstand zwischen Satteleinsatz und Installation von ungefähr 4 mm aufzuweisen.

5. Vorrichtung (1) nach einem der Ansprüche 1-4, wobei das Isolierelement (30a) mindestens eine Lage von nicht-komprimierbarer Isolierlage (31) und mindestens eine Lage von komprimierbarem Material (32) umfasst, wobei die Lage von komprimierbarem Material (32) auf einer Innenseite der nicht-komprimierbaren Isolierlage (31) vorhanden ist.

6. Vorrichtung (1) nach einem der Ansprüche 1-5, wobei das Isolierelement (30, 30a) einen geschlossenen Zellinhalt von mindestens 80 % zeigt, eine Dichte von mindestens 35 kg/m3 gemäß ISO 845 zeigt, und eine thermische Leitfähigkeit von weniger als 0,15W/(m^{∗}K) bei 0°C zeigt, vorzugsweise weniger als 0,05W/(m^{∗}K) bei 0°C, gemäß EN ISO 12667 bzw. EN ISO 8497, sowie einen Wasserdampfdurchlässigkeits- (WVT-) Blockierwert (µ) von mindestens 2500 zeigt, vorzugsweise mindestens 5000, besonders bevorzugt von mindestens 7000, gemäß EN 12086 bzw. EN 13469.

7. Vorrichtung (1) nach einem der Ansprüche 1-5, wobei mindestens ein Bereich des Isolierelements (30, 30a) polymerbasiert ist, vorzugsweise elastomerbasiert.

8. Vorrichtung (1) nach einem der Ansprüche 1-6, wobei das Schließelement (21a, 21b, 21c) in einer einzelnen Verwirklichung oder mehreren Verwirklichungen pro Mantelteilseite vorhanden ist und wiederverschließbar ist.

9. Vorrichtung (1) nach einem der Ansprüche 1-8, wobei das Schließelement (21c) der Mantelteile (11a, 11b) mittels eines Schienensystems (21c) verwirklicht ist, das in zwei Schritten wirkt, einem Schritt zum Ermöglichen einer Vorbefestigung und einem zweiten Schritt zum dichten Verschließen des Mantels.

10. Vorrichtung (1) nach einem der Ansprüche 1-9, wobei mindestens einer der Mantelteile (11a, 11b) mindestens einen Gewindeadapter (50) umfasst, der ein integriertes Gewinde (51) einschließt.

11. Vorrichtung (1) nach einem der Ansprüche 1-10, wobei das Isolierelement (30, 30a) Oberflächenstrukturen auf seiner Innenfläche aufweist, vorzugsweise dreieckige, rechteckige oder Rippenstrukturen.

12. Vorrichtung (1) nach einem der Ansprüche 1-10, wobei das Isolierelement (30, 30a) auf dessen Kanten und/oder dessen Seitenwänden mit einem Adhäsionsmittel oder Selbstadhäsionsmittel aufgebracht ist, vorzugsweise mit Trennschicht.

13. Vorrichtung (1) nach einem der Ansprüche 1-12, wobei die Mantelteile (11a, 11b) aus Metall, einem Thermoplast, einem thermoplastischen Elastomer, oder einem Duroplast oder jeglichen Kombinationen davon hergestellt ist.

14. Verfahren zum Herstellen einer Vorrichtung (1) nach einem der vorstehenden Ansprüche, wobei die Mantelteile (11a, 11b) mittels Gießens oder Formens hergestellt werden, und wobei das Isolierelement (30, 30a) mittels Formens oder Extrusionsexpansion hergestellt wird.

15. Verwendung einer Vorrichtung (1) nach einem der Ansprüche 1-13 zum Montieren und Befestigen von Installationen, vorzugsweise Leitungen oder Rohren oder ringförmigen Kanälen.

## Revendications

1. Dispositif (1) pour le montage et la fixation d'installations (40, 41), de préférence tuyaux ou conduits, en particulier dispositif pré-isolé (1), comprenant
au moins deux parties de coque (11a, 11b) réalisées en matériau rigide, avec chacune des parties de coque (11a, 11b) ayant au moins un élément de fermeture (21a-21c), de préférence un élément de verrouillage par encliquetage (21a-21b), et/ou une charnière (22) à relier à au moins une prochaine partie de coque (11a, 11b) pour former une coque fermée lorsque fixées,
avec chaque partie de coque (11a, 11b) ayant au moins deux inserts de berceau (20) pour supporter un élément isolant compressible et/ou comprimé (30, 30a),
dans lequel la somme totale des longueurs d'arcs de cercle intérieurs (2) d'un ensemble d'inserts de berceau est au moins 40 % et au maximum 100 % de la longueur d'arc total d'un cercle de berceau intérieur résultant (6), et
dans lequel un élément isolant (30, 30a) est prévu au niveau du côté intérieur de chaque partie de coque (11a, 11b), lequel élément isolant (30, 30a) est en contact avec les au moins deux inserts de berceau (20) de la partie de coque (11a, 11b) correspondante,
**caractérisé en ce que**
l'élément isolant (30, 30a) a une compressibilité d'au moins 5 %, au maximum de 70 % et a une augmentation progressive du module lorsqu'il est comprimé, et dans lequel la combinaison de propriétés et géométrie d'élément isolant et des inserts de berceau est sélectionnée de sorte que les inserts de berceau (20) ne percent pas l'élément isolant et n'entrent pas en contact direct avec l'installation lorsque le dispositif est monté et l'installation est remplie de milieu.

2. Dispositif selon la revendication 1, dans lequel l'élément isolant (30, 30a) fait saillie de la partie de coque (11a, 11b) correspondante.

3. Dispositif selon la revendication 1 ou 2, dans lequel au moins une couche de l'élément isolant à cellules ouvertes et/ou fermées compressible (30, 30a) est collée aux parties de coque (11a, 11b) ou s'ajuste de manière lâche dans les parties de coque (11a, 11b).

4. Dispositif selon la revendication 1, 2 ou 3, dans lequel il est adapté pour avoir une distance minimum préférée entre l'insert de berceau et l'installation d'environ 4 mm.

5. Dispositif (1) selon l'une quelconque des revendications 1 à 4, dans lequel l'élément isolant (30a) comprend au moins une couche de couche isolante non compressible (31) et au moins une couche de matériau compressible (32), la couche de matériau compressible (32) étant présente au niveau d'un côté intérieur de la couche isolante non compressible (31).

6. Dispositif (1) selon l'une quelconque des revendications 1 à 5, dans lequel l'élément isolant (30, 30a) montre une teneur en cellules fermées d'au moins 80 %, une densité d'au moins 35 kg/m³ selon ISO 845, et une conductivité thermique de moins de 0,15 W/(m^{∗}K) à 0 °C, de préférence de moins de 0,05 W/(m^{∗}K) à 0°C selon EN ISO 12667 ou EN ISO 8497, respectivement, ainsi qu'une valeur de blocage (µ) de transmission de vapeur d'eau (WVT) d'au moins 2500, de préférence d'au moins 5000, de manière particulièrement préférée d'au moins 7000 selon EN 12086, ou EN 13469, respectivement.

7. Dispositif (1) selon l'une quelconque des revendications 1 à 5, dans lequel au moins une portion de l'élément isolant (30, 30a) est à base de polymère, de préférence à base d'élastomère.

8. Dispositif (1) selon l'une quelconque des revendications 1 à 6, dans lequel l'élément de fermeture (21a, 21b, 21c) est présent en réalisation simple ou réalisations multiples par côté de partie de coque et est refermable.

9. Dispositif (1) selon l'une quelconque des revendications 1 à 8, dans lequel l'élément de fermeture (21c) des parties de coque (11a, 11b) est réalisé par un système de goupille (21c) qui agit en deux étapes, une étape pour permettre une préfixation et une seconde étape pour fermer la coque de manière étanche.

10. Dispositif (1) selon l'une quelconque des revendications 1 à 9, dans lequel au moins une des parties de coque (11a, 11b) comprend au moins un adaptateur fileté (50) incluant un filet intégré (51).

11. Dispositif (1) selon l'une quelconque des revendications 1 à 10, dans lequel l'élément isolant (30, 30a) a des structures de surface sur sa face intérieure, de préférence des structures triangulaires, rectangulaires ou nervurées.

12. Dispositif (1) selon l'une quelconque des revendications 1 à 10, dans lequel l'élément isolant (30, 30a) est appliqué sur ses bords et/ou ses parois latérales avec un adhésif ou auto-adhésif, de préférence avec une doublure détachable.

13. Dispositif (1) selon l'une quelconque des revendications 1 à 12, dans lequel les parties de coque (11a, 11b) sont réalisées en métal, en un thermoplastique, en un élastomère thermoplastique, ou en un thermodurcissable ou toute combinaison de ceux-ci.

14. Procédé de fabrication d'un dispositif (1) selon l'une quelconque des revendications précédentes, dans lequel les parties de coque (11a, 11b) sont réalisées par coulage ou moulage, et dans lequel l'élément isolant (30, 30a) est réalisé par moulage ou par expansion-extrusion.

15. Utilisation d'un dispositif (1) selon l'une quelconque des revendications 1 à 13 pour le montage et la fixation d'installations, de préférence de tuyaux ou de tubes ou de conduits annulaires.
